(19) Europäisches Patentamt
European Patent Office
Office européen des brevets

(11) **EP 4 741 758 A1**

(12) **EUROPEAN PATENT APPLICATION**
published in accordance with Art. 153(4) EPC

(43) Date of publication:
**13.05.2026 Bulletin 2026/20**

(21) Application number: 24836360.8

(22) Date of filing: **04.07.2024**

(51) International Patent Classification (IPC):
*G01B 9/0209* (2022.01)     *G01B 9/02001* (2022.01)
*G01B 11/24* (2006.01)     *G06F 17/10* (2006.01)
*G01B 21/08* (2006.01)

(52) Cooperative Patent Classification (CPC):
**G01B 9/02001; G01B 9/0209; G01B 11/24;**
**G01B 21/08; G06F 17/10**

(86) International application number:
**PCT/KR2024/009502**

(87) International publication number:
**WO 2025/009913 (09.01.2025 Gazette 2025/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **06.07.2023 KR 20230087631**
**03.06.2024 KR 20240072685**

(71) Applicant: **Park Systems Corp.**
**Yeongtong-gu**
**Suwon-si, Gyeonggi-do 16229 (KR)**

(72) Inventors:
• **JO, Ahjin**
  **Seoul 06204 (KR)**
• **LEE, Minjeung**
  **Incheon 22002 (KR)**
• **KIM, Hyoju**
  **Suwon-si Gyeonggi-do 16509 (KR)**
• **AHN, Byoung-Woon**
  **Anyang-si Gyeonggi-do 14045 (KR)**
• **PARK, Sang-il**
  **Seongnam-si Gyeonggi-do 13540 (KR)**

(74) Representative: **Müller Schupfner & Partner**
**Patent- und Rechtsanwaltspartnerschaft mbB**
**(Muc)**
**Bavariaring 11**
**80336 München (DE)**

(54) **WHITE LIGHT INTERFEROMETRY USING SINUSOIDAL INTERPOLATION AND SINUSOIDAL INTERPOLATION METHOD OF WHITE LIGHT INTERFEROMETRY**

(57)     Disclosed are: white light interferometry using sinusoidal interpolation in which interference fringes generated by measurement light and reflected light can be expressed naturally; and a sinusoidal interpolation of the white light interferometry. The white light interferometry using sinusoidal interpolation comprises: a charge coupled device (CCD) image sensor for capturing interference fringes to generate a plurality of interference fringe images; and an image analysis processor for accumulating the plurality of interference fringe images to generate a white light interference fringe signal (WLI fringe signal, I[n]).

FIG. 1

**Description**

**Technical Field**

The present invention relates to a white light interferometry using a Sinusoidal Interpolation and a sinusoidal interpolation method of the white light interferometry, more particularly, to a white light interferometry using a sinusoidal interpolation and a sinusoidal interpolation method of the white light interferometry in which the white light is irradiated to a sample and a mirror, respectively, and then interference fringes generated by reflected measurement light and the reflected light are interpolated through a sinusoidal interpolation.

**Background Art**

In recent fields of nanoscience, semiconductors, nanophysics, nanochemistry, nanomaterials, nanooptics, surface science, medical imaging, biology, biophysics, medical physics, or biomedical optics, there is a growing demand to measure three-dimensional shape information of samples with a three-dimensional nanostructures or micrometer structures.

A white light interferometry that uses interference phenomenon of white light has been used to measure the three-dimensional shape information of the sample.

A general white light interferometry uses a beam splitter that separates a white light source and generates a path toward the sample and the mirror, respectively. The white light irradiated to the sample and the mirror, respectively by the beam splitter is reflected and then recombined and transmitted to the CCD (charge-coupled device) image sensor, which captures interference fringe images by the combined light reflected from the sample and the mirror, respectively. The image analysis processor analyzes the interference fringe image captured by the CCD image sensor to generate 3D shape information of the sample.

At this time, the sample is placed on the stage, and the stage is moved along the path axis (generally the Z-axis) of the light source by a separate driving assembly to generate a path difference between the sample side and the mirror side. The interference fringe image captured by the CCD image sensor forms different interference fringe images according to a change in the path difference between the sample side and the mirror side, and the image analysis processor generates three-dimensional shape information of the sample based on the interference fringes from which the different interference fringe images are accumulated.

On the other hand, conventional white light interferometry has a problem in that the shape of the white light interference fringe (WLI Fringe) is expressed unnaturally according to the physically limited minimum movable length of the driving assembly that moves the stage to generate a path difference between the sample side and the mirror side, i.e., the Z Step Size.

The problem due to the unnatural shape of the white light interference fringe (WLI Fringe) according to this limited Z Step Size has been solved by interpolating according to the Cubic Spline, but the Cubic Spline has a large amount of calculation, while the accuracy is low.

**Disclosure of Invention**

**Technical Problem**

An object of the present invention for solving the above-described problem is to provide a white light interferometry using a sinusoidal interpolation, which can naturally express the shape of an interference fringe by interpolating an interference fringe generated by measurement light and reflected light that are reflected after white light split by a beam splitter is irradiated to a sample and a mirror, respectively, through sinusoidal interpolation, and a sinusoidal interpolation method of the white light interferometry.

Another object of the present invention is to provide a white light interferometry using a sinusoidal interpolation capable of providing a fast and accurate interpolation by using a mathematical condition of a sinusoidal wavelength, and sinusoidal interpolation method of the white light interferometry.

**Solution to Problem**

In order to achieve the above-described object, a white light interferometry using a sinusoidal interpolation according to an embodiment of the present invention includes a light source providing white light, a stage on which a sample is placed, a stage moving assembly for moving the stage in a path axis direction of the white light, a mirror having a reflective surface, a beam splitter for dividing a path of the white light provided from the light source into the sample side and the mirror side, and a CCD (Charge Coupled Device) image sensor generating a plurality of interference fringe images by receiving measurement light reflected from the sample and reflected light reflected from the mirror from the beam splitter and capturing the interference fringes generated by the measurement light and reflected light while the stage is moved in the path axis direction by the stage movement assembly, and an image analysis processor for accumulating the plurality of interference fringe images to generate a white light interference fringe signal (WLI Fringe signal, I[n]), wherein the image analysis processor generates an interpolated white light interference fringe signal I[n]' by interpolating the generated white light interference fringe signal I[n] through sinusoidal interpolation.

The image analysis processor generates an amplitude graph (Envelope, A[n]) and a phase graph (Phase, θ[n]) by dividing the white light interference fringe signal I[n] into components according to amplitude and phase, respectively, when interpolating the white light interference fringe signal I[n] using a sinusoidal interpolation, and generates an interpolated amplitude graph A[n]' and an interpolated phase graph θ[n]' by interpolating the amplitude graph A[n] and the phase graph θ[n], respectively through the sinusoidal interpolation, and generates the interpolated white light interference fringe signal I[n]' based on the interpolated amplitude graph A[n]' and the interpolated phase graph θ[n]'.

In generating the amplitude graph and the phase graph by dividing the white light interference fringe signal into components according to amplitude and phase, respectively, the image analysis processor generates the amplitude graph (Envelope) by extracting components A[n] according to amplitude from the white light interference fringe signal I[n], and the phase graph (Phase) by extracting components θ[n] according to phase from the white light interference fringe signal I[n] based on the following Equation 1.

$$A[n] \text{ (Envelope)} = (c[n]^2 + s[n]^2)^{1/2}$$

$$\theta[n](\text{Phase}) = \text{Atan}(s[n], c[n])$$

<Equation 1>

(wherein the A[n] is the Amplitude on Pixel of WLI Fringe of the white light interference fringe signal, and the θ[n] is the Phase on Pixel of WLI Fringe of the white light interference fringe signal, and the c[n] is the Cosine Component of WLI Fringe of the white light interference fringe signal calculated by c[n] = A[n] × cos(θ[n]), and the s[n] is the Sine Component of WLI Fringe of the white light interference fringe signal calculated by s[n] = A[n] × sin(θ[n]).

In generating the interpolated amplitude graph A[n]' and the interpolated phase graph θ[n]' by interpolating the amplitude graph A[n] and the phase graph θ[n] respectively through the sinusoidal interpolation, the image analysis processor calculates the interpolation values (A[n+0.5], θ[n+0.5]) between the first measurement values (A[n], θ[n]) and the second measurement values (A[n+1], θ[n+1]) of the amplitude graph A[n] and the phase graph 0[n] respectively, based on the following Equation 2.

$$A[n + 0.5] = 0.5*(A[n] + A[n + 1])$$

$$\theta[n + 0.5] = 0.5*(\theta[n] + \theta[n + 1])$$

<Equation 2>

(wherein the A[n] is the Amplitude on Pixel of WLI Fringe of the white light interference fringe signal, and θ[n] is the Phase on Pixel of WLI Fringe of a white light interference fringe signal.)

In generating the interpolated white light interference fringe signal I[n]' based on the interpolated amplitude graph A[n]' and the interpolated phase graph θ[n]', the image analysis processor calculates the interpolated white light interference fringe signal I[n]' based on the each measurement values (A[n], θ[n]) of the amplitude graph A[n] and the phase graph θ[n] and each interpolation values (A[n+0.5], θ[n+0.5]) of the interpolated amplitude graph A[n]' and the interpolated phase graph θ[n]' based on the following Equation 3.

$$I[n] = A[n] \times \cos(\theta[n])$$

<Equation 3>

(wherein the A[n] is the Amplitude on Pixel of WLI Fringe of a white light interference fringe signal, and the θ[n] is the Phase on Pixel of WLI Fringe of a white light interference fringe signal.)

In order to achieve the above-described object, a white light interferometry using a sinusoidal interpolation according to an embodiment of the present invention is the white light interferometry using a sinusoidal interpolation in which the white light is irradiated to a sample and a mirror, respectively, and then obtained a shape of the sample by analyzing interference fringes generated by reflected measurement light and the reflected light, wherein the white light interferometry comprises a CCD (Charge Coupled Device) image sensor for generating a plurality of interference fringe images by capturing the interference fringe, and an image analysis processor for generating a white light interference fringe signal (WLI Fringe signal, I[n]) by accumulating the plurality of interference fringe images, wherein the image analysis processor generates an interpolated white light interference fringe signal I[n]' by interpolating the generated white light interference fringe signal I[n] through the sinusoidal interpolation.

In interpolating the white light interference fringe signal I[n] using a sinusoidal interpolation, the image analysis processor generates an amplitude graph (Envelope, A[n]) and a phase graph (Phase, $\theta$[n]) based on the white light interference fringe signal I[n], and generates an interpolated amplitude graph A[n]' and an interpolated phase graph $\theta$[n]' by interpolating the amplitude graph A[n] and the phase graph $\theta$[n] respectively using the sinusoidal interpolation, and generates the interpolated white light interference fringe I[n]' based on the interpolated amplitude graph A[n]' and the interpolated phase graph I[n]'.

The image analysis processor, when generating the amplitude graph A[n] and the phase graph $\theta$[n] based on the white light interference fringe signal I[n], extracts components of amplitude and phase from the white light interference fringe signal I[n], respectively, to generate an amplitude graph A[n] and a phase graph $\theta$[n] in linear.

The linear amplitude graph A[n] is an envelope in contact with all the peak points of the white light interference fringe signal I[n] among the envelopes of the white light interference fringe signal I[n].

The image analysis processor, when interpolating the amplitude graph A[n] and the phase graph $\theta$[n] respectively using the sinusoidal interpolation, calculates interpolation values (A[n+0.5], $\theta$[n+0.5]) between the first measurement values (A[n], $\theta$[n]) and the second measurement values (A[n+1], $\theta$[n+1]) of the amplitude graph A[n] and the phase graph $\theta$[n], and wherein the interpolation values (A[n+0.5], $\theta$[n+0.5]) is average value of the first measurement values (A[n], $\theta$[n]) and the second measurement values (A[n+1], $\theta$[n+1]).

The image analysis processor, when generating the interpolated white light interference fringe signal I[n]' based on the interpolated amplitude graph A[n]' and the interpolated phase graph $\theta$[n]', generates the interpolated white light interference fringe signal I[n]' based on the measured value (A[n], $\theta$[n]) of each the amplitude graph A[n] and the phase graph $\theta$[n], and the each interpolation values (A[n+0.5], $\theta$[n+0.5]) of the interpolated amplitude graph A[n]' and the interpolated phase graph $\theta$[n]'.

The measured value (A[n], $\theta$[n]) of each the amplitude graph A[n] and the phase graph $\theta$[n], and the measured values (A[n]', $\theta$[n]') of each the interpolated amplitude graph A[n]' and the interpolated phase graph $\theta$[n]' have the same value each other.

The image analysis processor, when generating the interpolated white light interference fringe signal I[n]' based on the interpolated amplitude graph A[n]' and the interpolated phase graph $\theta$[n]', determines the intensity value of the interpolated white light interference fringe signal I[n]' based on each the measured values (A[n], $\theta$[n]) of interpolated amplitude graph A[n]' and the interpolated phase graph $\theta$[n]' or the interpolation values (A[n+0.5], $\theta$[n+0.5]), when the measured value A[n] of the interpolated amplitude graph A[n]' is maximum and the phase of the interpolated phase graph $\theta$[n]' is 0° and the measured value $\theta$[n] or the interpolation value ($\theta$[n+0.5]) of the interpolated phase graph is greater than -90° to less than 90°, the intensity values of the interpolated white light interference fringe signal I[n]' have a positive (+) value corresponding to the measured value A[n] or the interpolation value (A[n+0.5]) of the interpolated amplitude graph A[n]', if the measured value $\theta$[n] or the interpolation value ($\theta$[n+0.5]) of the interpolated phase graph is greater than 90° to less than 270°, the intensity values of the interpolated white light interference fringe signal I[n]' have a negative (-) value corresponding to the measured value A[n] or the interpolation value (A[n+0.5]) of the interpolated amplitude graph A[n]', and if the measured value $\theta$[n] or the interpolation value ($\theta$[n+0.5]) of the interpolated phase graph is at -90°, 90° or 270°, the intensity values of the interpolated white light interference fringe signal I[n]' has a value of 0.

In order to achieve the above-described object, a sinusoidal interpolation method of a white light interferometry according to an embodiment of the present invention is a method of sinusoidal interpolation of a white light interferometry, in which an image analysis processor interpolates a white light interference pattern signal I[n] through a sinusoidal interpolation, thereby generating an interpolated white light interference pattern signal I[n]', wherein the method of sinusoidal interpolation of the white light interferometry comprise generating an amplitude graph (Envelope, A[n]) and a phase graph (Phase, $\theta$[n]) based on the white light interference fringe signal I[n] by image analysis processor, generating an interpolated amplitude graph A[n]' and an interpolated phase graph $\theta$[n]' by interpolating the amplitude graph A[n] and the phase graph 0[n] respectively through the sinusoidal interpolation by the image analysis processor, and generating the interpolated white light interference fringe signal I[n]' based on the interpolated amplitude graph A[n]' and the interpolated phase graph 0[n]' by the image analysis processor.

The generating an amplitude graph (Envelope, A[n]) and a phase graph (Phase, $\theta$[n]) based on the white light interference fringe signal I[n] by the image analysis processor comprise generating a linear phase graph $\theta$[n] and the amplitude graph A[n], by extracting a component depending on the Amplitude and Phase of the white light interference fringe signal I[n], respectively, by the image analysis processor generating.

The generating a linear phase graph θ[n] and the amplitude graph A[n], by extracting a component depending on the Amplitude and Phase of the white light interference fringe signal I[n], respectively, by the image analysis processor comprise generating the amplitude graph (Envelope) by extracting component A[n] depending on the amplitude of the white light interference fringe signal I[n] and generating phase graph (Phase) by extracting component 0[n] depending on the phase of the white light interference fringe signal I[n] the white light interference fringe signal I[n], based on the Equation 1 below by the image analysis processor.

$$A[n] \text{ (Envelope)} = (c[n]^2 + s[n]^2)^{1/2}$$

$$\theta[n](\text{Phase}) = \text{Atan}(s[n], c[n]).$$

$$<\text{Equation 1}>$$

(wherein A[n] is the Amplitude on Pixel of WLI Fringe, and θ[n] is the Phase on Pixel of WLI Fringe, and c[n] is the Cosine Component of the WLI Fringe calculated by $c[n] = A[n] \times \cos(\theta[n]$, and the s[n] is the Sine Component of WLI Fringe calculated by $s[n] = A[n] \times \sin(\theta[n])$.

The generating an interpolated amplitude graph A[n]' and an interpolated phase graph θ[n]' by interpolating the amplitude graph A[n] and the phase graph θ[n] respectively through the sinusoidal interpolation by the image analysis processor comprise calculating interpolation values (A[n+0.5], θ[n+0.5]) between first measured values (A[n], θ[n]) and second measured values (A[n+1], θ[n+1]) of each of the amplitude graph A[n] and the phase graph θ[n] by the image analysis processor, the interpolation values (A[n+0.5], θ[n+0.5]) are average values of the first measurement values (A[n], θ[n]) and the second measurement values (A[n+1], θ[n+1]).

The calculating interpolation values (A[n+0.5], θ[n+0.5]) between first measured values (A[n], θ[n]) and second measured values (A[n+1], θ[n]) of each of the amplitude graph A[n] and the phase graph θ[n] by the image analysis processor comprise calculating interpolation values (A[n+0.5], θ[n+0.5]) between first measured values (A[n], θ[n]) and second measured values (A[n+1], θ[n+1]) of each of the amplitude graph A[n] and the phase graph θ[n] based in Equation 2 below by the image analysis processor.

$$A[n +0.5] = 0.5*(A[n] +A[n + 1])$$

$$\theta[n+0.5] = 0.5*(\theta[n] + \theta[n+1]).$$

$$<\text{Equation 2}>$$

(wherein A[n] is the Amplitude on Pixel of WLI Fringe, and θ[n] is the Phase on Pixel of WLI Fringe.)

The generating an interpolated white light interference fringe signal I[n]' based on the interpolated amplitude graph A[n]' and the interpolated phase graph θ[n]' by the image analysis processor comprise generating the interpolated white light interference fringe signal I[n]' based on the measured values (A[n], θ[n]) of each of the amplitude graph A[n] and the phase graph θ[n], and the interpolation values (A[n+0.5], θ[n+0.5]) of each of the interpolated amplitude graph A[n]' and the interpolated phase graph θ[n]' by the image analysis processor.

The generating the interpolated white light interference fringe signal I[n]' based on the measured values (A[n], θ[n]) of each of the amplitude graph A[n] and the phase graph θ[n], and the interpolation values (A[n+0.5], θ[n+0.5]) of each of the interpolated amplitude graph A[n]' and the interpolated phase graph θ[n]' by the image analysis processor comprise, generating the interpolated white light interference pattern signal I[n]' based on the measured values (A[n], θ[n]) of each of the amplitude graph A[n] and the phase graph θ[n], and the interpolation values (A[n+0.5], θ[n+0.5]) of each the interpolated amplitude graph A[n]' and the interpolated phase graphs θ[n]' based on Equation 3 below by the image analysis processor.

$$I[n] = A[n] \times \cos(\theta[n])$$

$$<\text{Equation 3}>$$

(wherein A[n] is the Amplitude on Pixel of WLI Fringe, and θ[n] is the Phase on Pixel of WLI Fringe.)

## Advantageous Effects of Invention

According to the present invention, a white light interferometry using a sinusoidal interpolation and a sinusoidal interpolation method for the white light interferometry, the interference fringe acquired from a CCD image sensor can be interpolated through the sinusoidal interpolation to naturally express the shape of the interference fringe.

According to the present invention, a white light interferometry using a sinusoidal interpolation and a sinusoidal interpolation for the white light interferometry, the interference fringe acquired from a CCD image sensor can be quickly and accurately interpolated by using the mathematical conditions of the sinusoid wavelength.

According to the present invention, a white light interferometry using a sinusoidal interpolation and a sinusoidal interpolation method for the white light interferometry, the sinusoidal interpolation is advantageously optimized numerically and accelerated by a GPU or the like.

## Brief Description of Drawings

FIG. 1 is a schematic diagram illustrating an embodiment of a white light interferometry using a sinusoidal interpolation according to the present invention.

FIG. 2 is a diagram illustrating a process for interpolating a white light interference fringe signal generated by an image analysis processor according to the present invention.

FIG. 3 is a diagram illustrating a process in which a white light interference fringe signal of the same sample according to a change in phase and a white light interference fringe signal thereof are interpolated.

FIG. 4 is a diagram illustrating a state in which a white light interference pattern signal through a sinusoidal interpolation to generate an interpolated white light interference pattern signal interpolated by the image analysis processor according to the present invention.

FIG. 5 is a diagram schematically illustrating a sinusoidal interpolation of an image analysis processor according to the present invention.

FIGS. 6 to 8 are flowcharts of a method of sinusoidal interpolation of a white light interferometry according to the present invention.

## Best Mode for Carrying out the Invention

Hereinafter, some embodiments of the present invention will be described in detail with reference to exemplary drawings. In assigning reference numbers to the components of each drawing, it should be noted that the same components are made to have the same sign as much as possible, even if they are displayed on different drawings.

Further, in describing the embodiment of the present invention, a detailed description of known constructions or functions is omitted if it is determined that the detailed description of known constructions or functions hinders understanding of the embodiment of the present invention.

In addition, in describing the components of the embodiments of the present invention, terms such as first, second, A, B, (a), (b), and the like may be used. These terms are used only to distinguish a component from other components, and the nature, sequence, or order of the component is not limited by the terms.

In the present specification, the singular type also includes the plural type unless otherwise specified in the phrase. The "includes" and/or "including" used in the specification does not exclude the presence or addition of one or more other components other than the mentioned components.

Hereinafter, the present invention will be described in more detail with reference to the accompanying drawings.

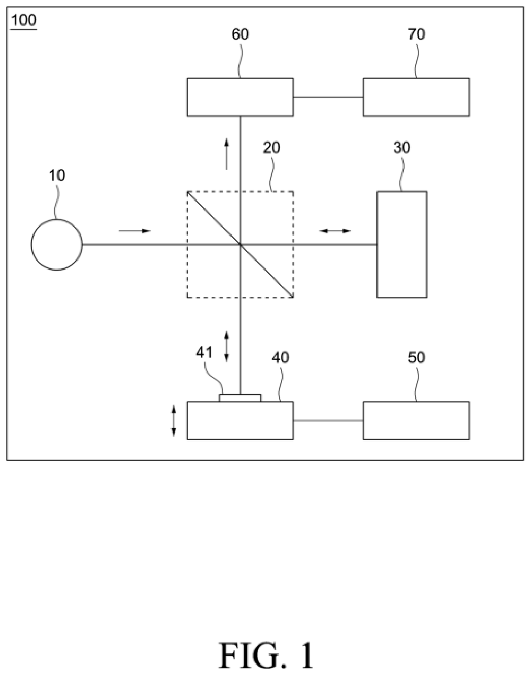

FIG. 1 is a schematic diagram illustrating an embodiment of a white light interferometry 100 using a sinusoidal interpolation according to the present invention.

A white light interferometry 100 using a sinusoidal interpolation according to the present invention (hereinafter, referred to as 'white light interferometry 100') includes a light source 10, a beam splitter 20, a mirror 30, a stage 40, a stage moving assembly 50, a CCD image sensor 60, and an image analysis processor 70, with reference to FIG. 1.

The light source 10 generates white light. The light source 10 provides white light to the beam splitter 20, and the beam splitter 20 splits the white light provided from the light source 10 and provides it to the sample 41 and the mirror 30.

The sample 41 is placed on the upper surface of the stage 40. The sample 41 is a measurement object to be measured for surface information. The sample 41 may be a nanostructure such as a semiconductor device.

The stage moving assembly 50 moves the stage 40 toward or away from the beam splitter 20. That is, the stage moving assembly 50 moves the stage 40 along the path axis (Z-axis) of white light provided from the beam splitter 20 to the stage 40. The stage moving assembly 50 may move the stage 40 along the path axis (Z-axis) along the path axis (Z-axis) of white light based on a minute z step size (for example, 68.75 nm which is $\lambda/8$). As the stage 40 is moved by the stage moving assembly 50, a minute path difference occurs between the measurement light and the reflected light transmitted to the CCD image sensor 60.

The mirror 30 has a reflective surface on one surface facing the beam splitter 20.

The beam splitter 20 divides the path of white light provided from the light source into a sample 41 side and a mirror 30 side. The beam splitter 20 provides a part of the white light provided from the light source 10 toward the stage 40 and provides the rest of the white light to the mirror 30.

The beam splitter 20 changes the path of the white light so that some of the white light provided from the light source 10 is transmitted to the stage 40 side and the sample 41 side. The white light transmitted to the sample 41 side is reflected to the beam splitter 20 as measurement light and is transmitted to the CCD image sensor 60 past the beam splitter 20.

The beam splitter 20 provides the mirror 30 with the rest of the white light provided from the light source 10. The white light provided to the mirror 30 is reflected and transmitted back to the beam splitter 20. The beam splitter 20 changes the path of the reflected light so that the reflected light reflected from the mirror 30 is transmitted to the CCD image sensor 60.

The beam splitter 20 divides white light into a sample 41 side and a reflective surface side of the mirror 30. The measurement light reflected from the sample 41 and the reflected light reflected from the mirror 30 are transmitted to the CCD image sensor 60 by the beam splitter 20. The measurement light reflected from the sample 41 and the reflected light reflected from the mirror 30 generate interference fringe due to a minute path difference change.

Centered around the beam splitter 20, separate lenses (not shown) may be further included on the light source 10 side, the sample 41 side, the mirror 30 side, and the CCD image sensor 60 side to focus white light, measurement light, and reflected light, respectively.

A CCD image sensor (60, Charge Coupled Device image sensor) receives measurement light reflected from the sample 41 and reflected light reflected from the mirror 30 from the beam splitter 20. A CCD image sensor 60 captures interference fringes of pixels generated by measurement light and reflected light at preset time intervals while a stage 40 is moved stepwise in the Z-axis direction according to a predetermined z step size by a stage moving assembly 50. The CCD image sensor 60 captures interference fringes at preset time intervals to generate a plurality of interference fringe images. Here, the pixel means a unit pixel included in the XY plane of the interference fringe image. The CCD image sensor 60 transmits the plurality of interference fringe images captured at preset time intervals to the image analysis processor 70.

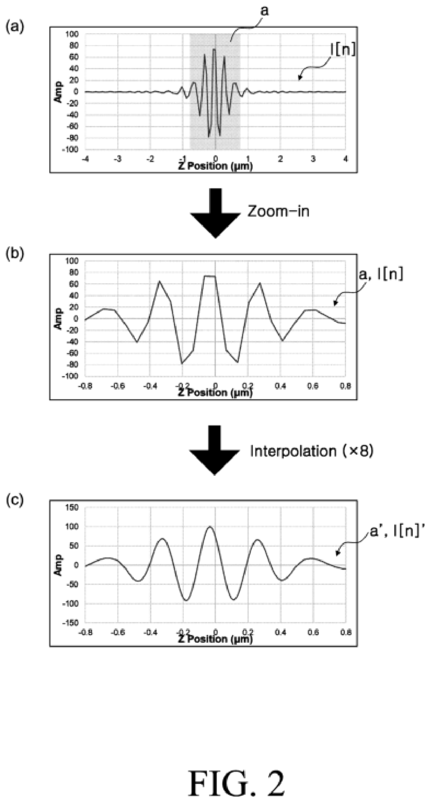

The image analysis processor 70 accumulates the plurality of interference fringe images received from the CCD image sensor 60 to generate a white light interference fringe signal (WLI fringe signal, I[n]) as shown in (a) of FIG. 2.

FIG. 2 is a diagram illustrating a process for interpolating the white light interference fringe signal generated by the image analysis processor 70 according to the present invention. Specifically, (a) of FIG. 2 is a view illustrating a graph according to the white light interference pattern signal generated by the image analysis processor 70, (b) of FIG. 2 is a view illustrating a graph enlarging a main portion of the graph according to the white light interference pattern signal shown in (a) of FIG. 2, and (c) of FIG. 2 is a view illustrating a graph enlarging a main portion of the graph according to the interpolated white light interference pattern signal.

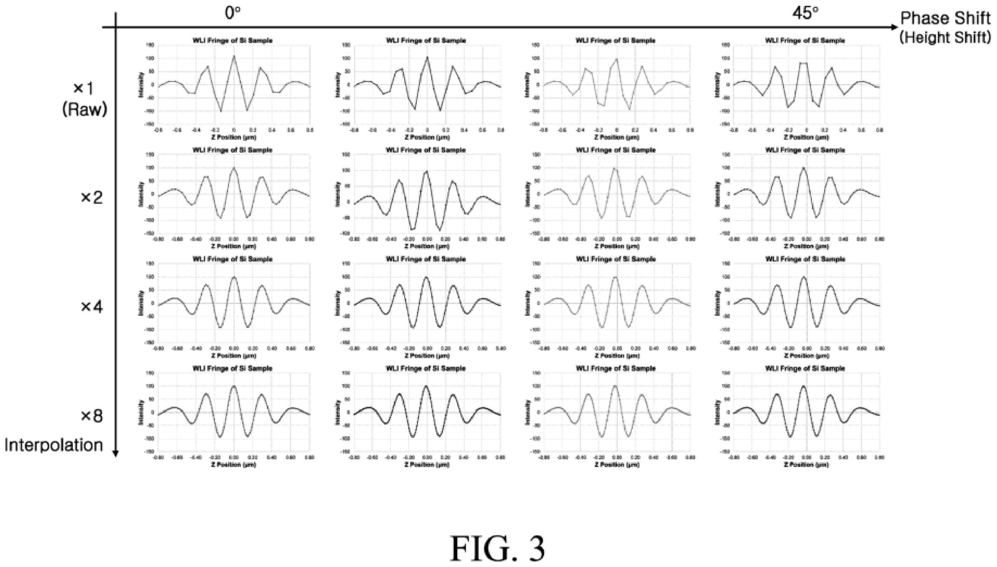

FIG. 3 is a diagram illustrating a process in which a white light interference fringe signal of the same sample 41 according to a phase change and a white light interference fringe signal thereof are interpolated.

The white light interferometry 100 according to the present invention includes all known white light interferometers in which white light is split by a beam splitter 20 and irradiated with a sample 41 and a mirror 30, respectively, and then interference patterns generated by reflected, measured light, and the reflected light are analyzed to acquire the shape of the sample 41. At this time, the white light interferometry 100 comprises, as is known, a CCD image sensor 60 which captures an interference fringe to produce a plurality of interference fringe images, and an image analysis processor 70 which analyzes the generated white light interference fringe signal to produce surface information of a sample 41.

The white light interference fringe signal means that when the stage 40 moves in the Z-axis direction stepwise according to a predetermined z step size, each of the intensities (or intensity) of a plurality of interference fringe pixels captured at each preset time interval is an x-axis coordinate, the position of the sample 41 changed according to the movement of the stage 40 is a y-axis coordinate, and the intensities of each pixel are accumulated and displayed in a graph.

The white light interference pattern signal generated by the image analysis processor 70 is as shown in (a) of FIG. 2. The center of the white light interference fringe signal includes a main portion (a) in which the intensity of the interference fringe changes rapidly, and an enlarged appearance of the main portion (a) is illustrated in (b) of FIG. 2.

Referring to (b) of FIG. 2, the white light interference fringe signal has a problem in that the shape of the white light interference fringe signal is expressed unnaturally as the z step size of the stage moving assembly 50 that moves the stage 40 in the z-axis direction during interference fringe capturing every preset time, that is, the movable length of the stage 40 in the z-axis direction is physically limited (for example, 68.75 nm which is $\lambda/8$). In this way, the limited movable distance of the stage 40, due to physical limitations, imposes constraints on the representation, analysis, and interpretation of the white-light interference pattern.

**EP 4 741 758 A1**

For example, referring to FIG. 3, the raw white light interference pattern signal generated by capturing a sample 41 is expressed differently depending on the position of the stage 40, that is, the phase change of the measurement light, even when the same sample 41. This occurs because a slight change in height within the z step size (e.g., 68.75 nm) of the stage 40 cannot be accurately expressed through the current white light interferometry 100. However, as the raw white light interference pattern signal is interpolated several times (two times, four times, eight times, etc.), it can be seen that the shape of each interpolated white light interference pattern signal changes gradually in the same way.

Conventionally, as mentioned above, the unnatural shape of a white light interference pattern (WLI fringe) due to such a limited Z Step size was solved by interpolating according to the spline interpolation (Cubic Spline), but the spline interpolation had a large amount of calculation, and thus had limitations in the speed of generating and analyzing the white light interference pattern.

In addition, polynomial interpolation is also limited in applying to white light interference fringe signals having a sinusoidal wave. For example, in the case of polynomial interpolation, since the coefficient for each order is required, the number of Data Points required for Fitting is Fitting Order + 1, and if Sin and Cos Wave are sampled at 90° intervals, a 3rd or 4th-order polynomial approximation is required for accuracy, but since there are only three points within the interval, applying a 3rd or 4th-order polynomial approximation is difficult.

On the other hand, the Sinusoidal interpolation according to the present invention enables accurate Sin and Cos Fitting by interpolating at least two points required for interpolation as well as an intermediate point between the Slowly Varying Profile Points. The sinusoidal interpolation according to the present invention is characterized in that interpolation can be applied while surely meeting the Sin and Cos Wave conditions.

The image analysis processor 70 according to the present invention interpolates the white light interference fringe signal I[n] illustrated in (a) and (b) of FIG. 2 through the sinusoidal interpolation to generate the interpolated white light interference fringe signal I[n]'. The image analysis processor 70 may analyze the interpolated white light interference pattern signal I[n]' to calculate surface information of the sample 41.

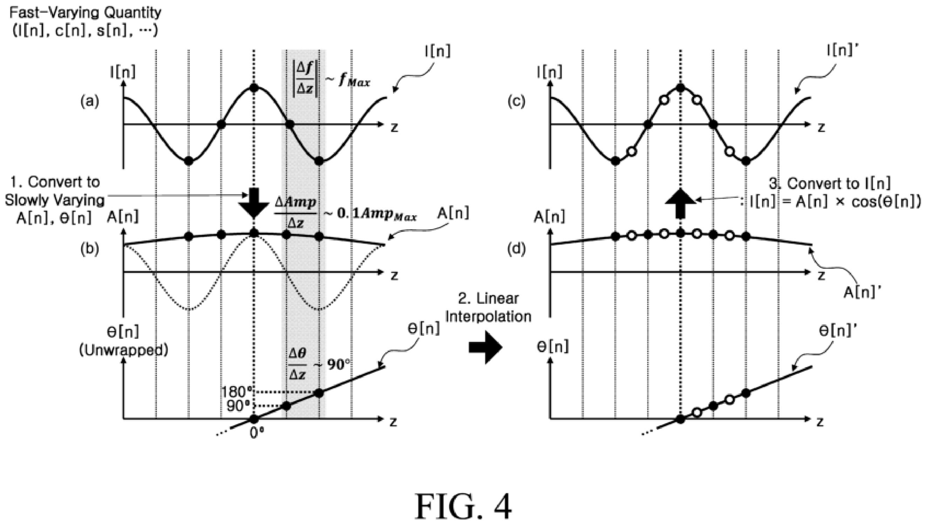

FIG. 4 is a diagram illustrating a state in which an image analysis processor 70 according to the present invention interpolates a white light interference pattern signal through a sinusoidal interpolation to generate an interpolated white light interference pattern signal. Specifically, (a) of FIG. 4 is a diagram illustrating a raw white light interference pattern signal graph generated by the image analysis processor 70, (b) of FIG. 4 is a diagram illustrating an amplitude graph and a phase graph respectively generated by the image analysis processor 70 by dividing into components according to amplitude and phase in the raw white light interference pattern signal, (c) of FIG. 4 is a diagram illustrating the interpolated amplitude graph and phase graph respectively generated by the image analysis processor 70, and (d) of FIG. 4 is a diagram illustrating a white light interference pattern signal graph interpolated through the sinusoidal interpolation by synthesizing the interpolated amplitude graph and phase graph. (a) to (d) of FIG. 4 schematically illustrate only the main portion of the white light interference fringe signal as shown in FIG. 2.

The image analysis processor 70 according to the present invention interpolates the white light interference fringe signal I[n] using a sinusoidal interpolation. The image analysis processor 70 calculates a value between two measured values of the white light interference fringe signal I[n] when the white light interference fringe signal I[n] is interpolated using a sinusoidal interpolation, and applies the calculated value to generate an interpolated white light interference fringe signal I[n]'. That is, the image analysis processor 70 calculates the median (Mid-point) of two measured values in the white light interference fringe signal I[n], and applies the result to interpolate the white light interference fringe signal.

The image analysis processor 70 according to the present invention calculates a median value between two measured values to interpolate a white light interference fringe signal I[n], thereby increasing resolution to an index value of 2 (for example, x2, x4 and x8). If interpolation is performed at x8, the z step size is effectively reduced from 68.75 nm to 8.6 nm.

Hereinafter, the interpolation of the white light interference fringe signal I[n] of the image analysis processor 70 will be described in detail with reference to FIG. 4.

In interpolating the white light interference fringe signal I[n] by using a sinusoidal interpolation, the image analysis processor 70 according to the present invention, divided initially generated white light interference fringe signal I[n] as shown in (a) of FIG. 4 into components according to the amplitude and phase, respectively, to generate an amplitude signal graph (Envelope, A[n]) and a phase signal graph (Phase, $\theta[n]$) as shown in (b) of FIG. 4, interpolated an amplitude signal graph A[n] and a phase signal graph $\theta[n]$ using a sinusoidal interpolation to calculate a median value, and applied the calculated value to generate the interpolated amplitude signal graph A[n]' and the interpolated phase signal graph $\theta[n]$' in (c) of FIG. 4, and generated the interpolated white light interference fringe signal I[n]' interpolated based on the amplitude signal graph A[n]' and the interpolated phase signal graph $\theta[n]$' as shown in (d) of FIG. 4, thereby complete the interpolation of the white light interference fringe signal I[n] using sinusoidal interpolation.

Since a raw white light interference fringe signal I[n], or a cosine component, a sine component, etc., have the variation amount per z step of the interference fringe with a fast variation similar to the maximum (Max) value, it is difficult to calculate the correction value immediately at a sinusoidal wave such as a raw white light interference fringe signal I[n].

However, since the amplitude signal graphs (Envelope, A[n]) or phase signal graphs (Phase, θ[n]) extracted from the raw white light interference fringe signal I[n] have slow variation in linear, each graph (An[n], θ[n]) can be easily interpolated by applying linear interpolation to each of the linear amplitude signal graphs (Envelope, A[n]) or linear phase signal graphs (Phase, θ[n]). In addition, according to the linear interpolation method, it is possible to convert the interpolated results (A[n]', θ[n]') back into a white light interference fringe signal at a sinusoidal wave, to generate an interpolated white light interference fringe signal I[n]'.

The image analysis processor 70 according to the present invention generates an amplitude signal graph A[n] and a phase signal graph θ[n] by dividing the raw white light interference fringe signal I[n] into components according to amplitude and phase, respectively, as shown in (b) of FIG. 4. The image analysis processor 70, when generating an amplitude signal graph A[n] and a phase signal graph θ[n] based on the white light interference fringe signal I[n], extracts components according to amplitude and phase from the raw white light interference fringe signal I[n], respectively, to generate an amplitude graph A[n] and a phase graph θ[n] in linear.

At this time, the linear amplitude signal graph A[n] may be an envelope in contact with both the amplitude of the maximum value for each rising and falling section of the white light interference fringe signal I[n]. That is, at this time, the linear amplitude signal graph A[n] may be an envelope in contact with all the peak points of the white light interference fringe signal I[n] among envelopes of the white light interference fringe signal I[n].

As an embodiment, the image analysis processor 70 according to the present invention, divides a raw white light interference fringe signal I[n] into components according to amplitude and phase, respectively, to generate an amplitude signal graph A[n] and a phase signal graph θ[n], wherein components A[n] according to amplitude are extracted to generate an amplitude signal graph (Envelope), and components θ[n] according to phases are extracted to generate the phase signal graph (Phase) from a white light interference fringe signal I[n] based on Equation 1 below.

$$A[n] \ (\text{Envelope}) = (c[n]^2 + s[n]^2)^{1/2}$$

$$\theta[n](\text{Phase}) = \text{Atan}(s[n], c[n]).$$

$$<\text{Equation 1}>$$

Here, A[n] is the amplitude on pixel of WLI Fringe of the raw white light interference fringe signal, θ[n] is the phase on pixel of WLI Fringe of the raw white light interference fringe signal, and c[n] is the cosine component of WLI Fringe of the white light interference fringe signal, which is calculated as $c[n] = A[n] \times \cos(\theta[n])$, and s[n] is the sine component of the white light interference fringe signal which is calculated as $s[n] = A[n] \times \sin(\theta[n])$.

Equation 1 means the calculation of the Slowly Varying component of WLI Fringe I[n]. Here, A[n] (Envelope) = $(c[n]^2 + s[n]^2)^{1/2}$ is using the Sqrt function, and θ[n] (Phase) = Atan (s[n], c[n]) is using the Atan function.

The image analysis processor 70 according to the present invention calculates the median value of the amplitude signal graph A[n] and the phase signal graph θ[n] and applies the calculated value to generate the interpolated amplitude signal graph A[n]' and the interpolated phase signal graph θ[n]' by interpolating, respectively as shown in (c) of FIG. 4.

In interpolating the amplitude signal graph A[n] and the phase signal graph θ[n] using a sinusoidal interpolation, the image analysis processor 70 calculates interpolation values (A[n+0.5], θ[n+0.5]) as the average value between the first measurement value (A[n], θ[n]) and the second measurement value (A[n+1], θ[n+1]) of the amplitude signal graph A[n] and the phase signal graph θ[n], respectively, wherein the interpolation values (A[n+0.5], θ[n+0.5]) may be the average values of the first measurement value (A[n], θ[n]) and the second measurement value (A[n+1], θ[n+1]).

When interpolating using the sinusoidal interpolation on the amplitude signal graph A[n], the image analysis processor 70 may put on center maximum value among the measured values of the amplitude signal graph A[n] and calculate an interpolation value which is a median value between the maximum value and the most adjacent measured value. For example, when the first measured value of the amplitude signal graph is A[1], the second measured value may be A[2], where the interpolation value may be A[1.5]. A[1.5] is calculated to have an average value of A[1] and A[2] values. The image analysis processor 70 calculates a median value A[n+0.5] of a plurality of measured values A[n] and A[n+1] and applies the calculated values to the amplitude signal graph A[n] to generate an interpolated amplitude signal graph A[n]' having the interpolation value.

Similarly, when interpolating using the sinusoidal interpolation on the phase signal graph θ[n], the image analysis processor 70 may calculate an interpolation value, which is a median value between a certain measurement value and the most adjacent measured value on the phase signal graph θ[n]. For example, when the first measured value of the phase signal graph is θ[1], the second measured value may be θ[2], where the interpolation value may be 0[1.5]. θ[1.5] is calculated to have an average value of θ[1] and θ[2] values. The image analysis processor 70 calculates θ[n+0.5] which is a median value of a plurality of measured values θ[n] and θ[n+1] and applies the calculated values to the phase signal graph θ[n] to generate an interpolated phase signal graph θ[n]' having an interpolation value.

As an embodiment, when generating an interpolated amplitude signal graph A[n]' and an interpolated phase signal graph θ[n]' by interpolating the amplitude signal graph A[n] and the phase signal graph θ[n] respectively using the sinusoidal interpolation, the image analysis processor 70 calculates the interpolation values (A[n+0.5], θ[n+0.5]) between the first measured values (A[n], θ[n]) and the second measured values (A[n+1], θ[n+1]) of the amplitude signal graph A[n] and the phase signal graph θ[n], respectively, based on Equation 2 below.

$$A[n + 0.5] = 0.5*(A[n] + A[n + 1])$$

$$\theta[n + 0.5] = 0.5*(\theta[n] + \theta[n + 1]).$$

<Equation 2>

Here, A[n] is the amplitude of the pixel of the white light interference fringe signal, and θ[n] means the phase on pixel of the pixel of the white light interference fringe signal.

Equation 2 is an equation for linear interpolation onto binary up-sampling of A[n] and θ[n] and is an equation for calculating correction values corresponding to Subindex (n + 0.5).

The image analysis processor 70 according to the present invention, generates an interpolated white light interference fringe signal I[n]' based on the interpolated amplitude signal graph A[n]' and the interpolated phase signal graph θ[n]' to complete the interpolation using the sinusoidal interpolation of the white light interference fringe signal I[n].

In generating an interpolated white light interference fringe signal I[n]' based on the interpolated amplitude signal graph A[n]' and the interpolated phase signal graph θ[n]', the image analysis processor 70 generates an interpolated white light interference fringe signal I[n]' based on the measured values (A[n], θ[n]) of each the amplitude signal graph A[n] and the phase signal graph θ[n], and based on the interpolation values (A[n+0.5], θ[n+0.5]) of each the interpolated amplitude signal graph A[n]' and the interpolated phase signal graph θ[n]'.

That is, the measured values (A[n], θ[n]) of each the amplitude signal graph A[n] and the phase signal graph θ[n] and the measured values (A[n'], θ[n]') of each the interpolated amplitude signal graph A[n]' and the interpolated phase signal graph θ[n]' have the same value. For example, referring to the amplitude signal graph A[n] and the interpolated amplitude signal graph A[n]' of (b) and (c) of FIG. 4 together, points located at the same coordinates on each the graphs (A[n], A[n]') refer to the same measured value in each the amplitude signal graph A[n] and the interpolated amplitude signal graph A[n]'. On the other hand, although not expressed in the amplitude signal graph A[n], points newly iindicated in the interpolated amplitude signal graph A[n]' refer to interpolation values newly calculated in the interpolated amplitude signal graph A[n]'.

Similarly, in the phase signal graph θ[n] of (b) of FIG. 4 and the interpolated phase signal graph θ[n]' of (c) of FIG. 4, points located at the same coordinates has the same measurement value, and points newly indicated in the interpolated phase signal graph θ[n]' of (c) of FIG. 4 refer to interpolation values newly calculated in the interpolated phase signal graph θ[n]'.

The image analysis processor 70 determines, when generating an interpolated white light interference fringe signal I[n]' based on the interpolated amplitude signal graph A[n]' and the interpolated phase signal graph θ[n]', the intensity value of the interpolated white light interference fringe signal I[n]' based on the measured values (A[n], θ[n]) and/or the interpolation values (A[n+0.5], θ[n+0.5]) of the (A[n], θ[n]) of the interpolated white light interference fringe signal I[n]'.

For example, as an embodiment, when the measured value A[n] of the interpolated amplitude signal graph A[n]' is maximum and the phase of the interpolated phase signal graph θ[n]' is 0°, if the measured value θ[n] and/or the interpolation value (θ[n+0.5]) of the interpolated phase signal graph is greater than -90° and less than 90°, the intensity value of the interpolated white light interference fringe signal I[n]' corresponding to the measured value θ[n] and/or the interpolation value (θ[n+0.5]) of that phase signal graph has positive (+) value corresponding to the measured values A[n] and/or the interpolation values (A[n+0.5]) of the interpolated amplitude signal graph A[n]. When the measured value θ[n] and/or the interpolation value (θ[n+0.5]) of the interpolated phase signal graph are more than 90° to 270°, the intensity value of the interpolated white light interference fringe signal I[n]' has a negative (-) value corresponding to the measured value A[n] and/or the interpolation value (A[n+0.5]) of the interpolated amplitude signal graph A[n]. When the measured value θ[n] or the interpolation value (θ[n+0.5]) of the interpolated phase graph is -90°, 90° or 270°, the intensity value of the interpolated white light interference fringe signal I[n]' has a value of 0.

More specifically, the image analysis processor 70 may, when the measured value A[n] of the interpolated amplitude signal graph A[n]' is the maximum and the phase of the interpolated phase signal graph θ[n]' is 0°, if the measured values θ[n] and/or interpolation value θ[n+0.5] of the interpolated phase signal graph is 0°, the intensity values of the interpolated white light interference fringe signal I[n]' have positive (+) value corresponding to measured values A[n] and/or interpolation values A[n+0.5] of the interpolated amplitude signal graph A[n]', if the measured value θ[n] and/or the interpolation value (θ[n+0.5]) of the interpolated phase signal graph is 90° the intensity value of the interpolated white light interference fringe signal I[n]' have a value of 0, and if the measured value θ[n] and/or the interpolation value (θ[n+0.5]) of the interpolated phase signal graph is 180°, the intensity value of the interpolated white light interference fringe signal I[n]' has negative (-) value corresponding to the measured value A[n] and/or the interpolation value (A[n+0.5]) of the interpolated amplitude signal graph A[n]', if the measured value θ[n] and/or the interpolation value (θ[n+0.5]) of the interpolated phase signal graph is 45°, the intensity value of the interpolated white light interference fringe signal I[n]' has a positive (+) value corresponding to the measured value A[n] and/or the interpolation value (A[n+0.5]) of the interpolated amplitude signal graph A[n]', and if the measured value θ[n] and/or the interpolation value (θ[n+0.5]) of the interpolated phase signal graph is 135°, the intensity value of the interpolated white light interference fringe signal I[n]' has a negative (-) value corresponding to the measured value A[n] and/or the interpolation value (A[n+0.5]) of the interpolated amplitude signal graph A[n]'.

As described above, the image analysis processor 70 generates the interpolated white light interference fringe signal I[n]' based on the interpolated amplitude signal graph A[n]' and the interpolated phase signal graph θ[n]'.

As an embodiment, when generating the interpolated white light interference fringe signal I[n]' based on the interpolated amplitude graph A[n]' and the interpolated phase graph θ[n]', the image analysis processor 70 generates the interpolated white light interference fringe signal I[n]' based on the measured values (A[n], θ[n]) of each the amplitude signal graph A[n] and the phase signal graph θ[n] and the interpolation values (A[n+0.5], θ[n+0.5]) of each the interpolated amplitude signal graph A[n]' and the interpolated phase signal graph θ[n]' based on the Equation 3 below.

$$I[n] = A[n] \times \cos(\theta[n])$$

<Equation 3>

Here, A[n] is the amplitude of the pixel of the WLI fringe, and θ[n] means the phase on pixel of the pixel of the WLI fringe. Equation 3 is an equation for converting I[n + 0.5] from calculated A[n + 0.5] and θ[n + 0.5].

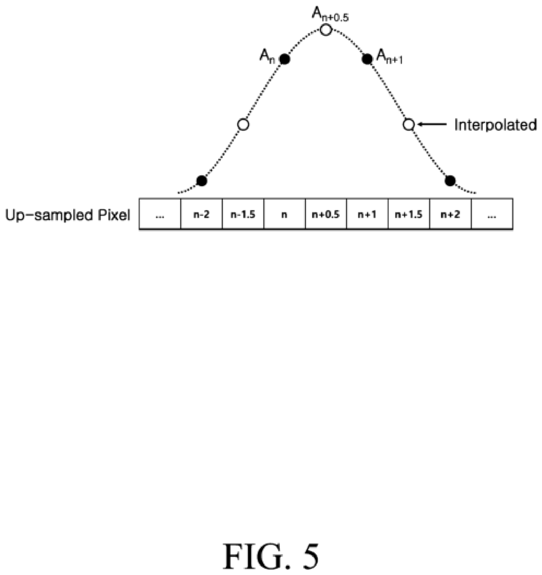

FIG. 5 is a diagram for briefly explaining a sinusoidal interpolation of the image analysis processor 70 according to the present invention.

Referring to FIG. 5, the interpolation of the white light interference fringe signal I[n] using the sinusoidal interpolation in the image analysis processor 70 is characterized by calculating Cos and Sine values only at the mid-point (N-1) and calculating by the sinusoidal method without using a complex Trigonometric function. Interpolation of the white light interference fringe signal I[n] using the sinusoidal interpolation in the image analysis processor 70 first generates the Amp values at the mid-point by averaging the Amp values on both sides (1st order), and then generates the remaining Amp values by moving average a total of 2N-1 Interpolated Pixels in 3 Pixel Steps.

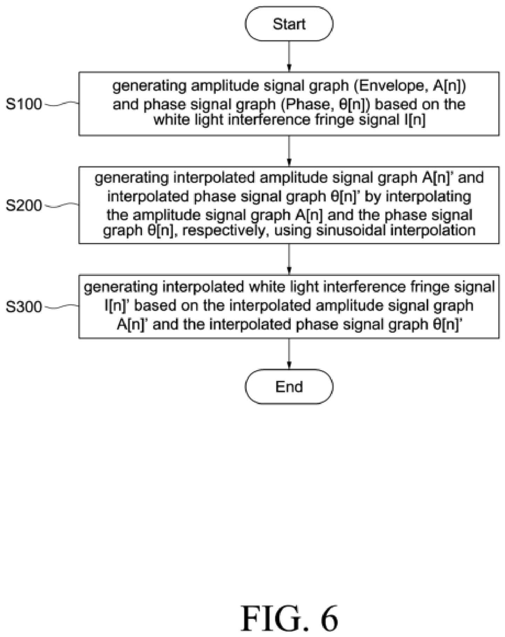

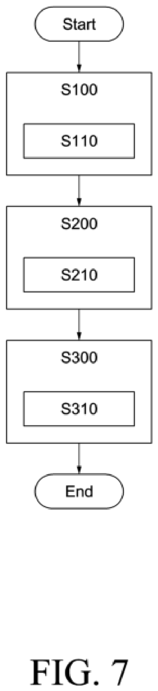

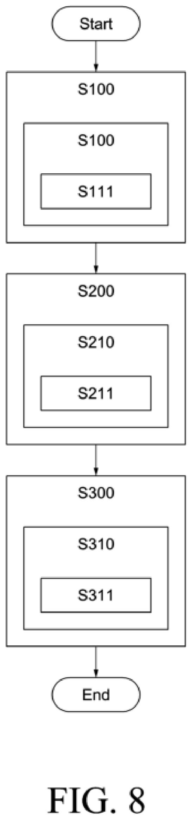

FIGS. 6 to 8 are flowcharts of a sinusoidal interpolation of the white light interferometry 100 according to the present invention.

In the sinusoidal interpolation method of the white light interferometry 100 according to the present invention, the image analysis processor 70 interpolates a white light interference fringe signal I[n] using a sinusoidal interpolation to generate an interpolated white light interference fringe signal I[n]'.

Referring to FIGS. 6 to 8, the method for sinusoidal interpolation of a white light interferometry 100 according to the present invention, comprises the step of the image analysis processor 70 generates an amplitude signal graph (Envelope, A[n]) and a phase signal graph (Phase, θ[n]) based on a white light interference fringe signal I[n] S100, the step of the image analysis processor 70 generates an interpolated amplitude signal graph A[n]' and an interpolated phase signal graph θ[n]' by interpolating, respectively, the amplitude signal graph A[n] and the phase signal graph θ[n] using the sinusoidal interpolation, S200, and the step of the image analysis processor 70 generates the interpolated white light interference fringe signal I[n]' based on the interpolated amplitude graph A[n]' and the interpolated phase graph 0[n]', S300.

S100 comprises a step S110 that the image analysis processor 70 extracts components according to amplitude and phase from the white light interference fringe signal I[n], respectively, to generate a linear amplitude signal graph A[n] and a phase signal graph θ[n].

S110 comprises a step S111 that the image analysis processor 70 extracts a component according to amplitude A[n] from a white light interference fringe signal I[n] to generate an amplitude signal graph (Envelope), and extracts component according to phase θ[n] from the white light interference fringe signal I[n] to generate a phase signal graph (Phase), based on Equation 1 below.

$$A[n] \text{ (Envelope)} = (c[n]^2 + s[n]^2)^{1/2}$$

$$\theta[n](\text{Phase}) = \text{Atan}(s[n], c[n]).$$

<Equation 1>

In Equation 1, A[n] is the amplitude on Pixel of WLI Fringe, $\theta[n]$ is the phase on Pixel of WLI Fringe, and c[n] is the cosine component of WLI Fringe, c[n] is calculated as $c[n] = A[n] \times \cos(\theta[n])$, and s[n] is the sine component of WLI Fringe, s[n] is calculated as $S[n] = A[n] \times \sin(\theta[n])$.

S200 comprises a step that the image analysis processor 70 calculates the interpolation values (A[n+0.5], $\theta[n+0.5]$) between first measurement values (A[n], $\theta[n]$) and second measurement values (A[n+1], $\theta[n+1]$) of each the amplitude signal graph A[n] and the phase signal graph $\theta[n]$, S210, the interpolation values (A[n+0.5], $\theta[n+0.5]$) are calculated as average values of the first measurement values (A[n], $\theta[n]$) and second measurement values (A[n+1], $\theta[n+1]$).

S210 comprises a step S211 that the image analysis processor 70 calculates the interpolation values (A[n+0.5], $\theta[n+0.5]$) between first measurement values (A[n], $\theta[n]$) and second measurement values (A[n+1], $\theta[n+1]$) of each the amplitude signal graph A[n] and the phase signal graph $\theta[n]$, based on Equation 2 below.

$$A[n + 0.5] = 0.5*(A[n] + A[n + 1])$$

$$\theta[n + 0.5] = 0.5*(\theta[n] + \theta[n + 1]).$$

<Equation 2>

In Equation 2, A[n] is the amplitude on pixel of WLI Fringe, and $\theta[n]$ is the phase on pixel of the WLI Fringe.

S300 comprises a step S310 that the image analysis processor 70 generates the interpolated white light interference fringe signal I[n]' based on the measured values (A[n], $\theta[n]$) of each of the amplitude signal graph A[n] and the phase signal graph $\theta[n]$, and the interpolation values (A[n+0.5], $\theta[n+0.5]$) of each the interpolated amplitude signal graph A[n]' and the interpolated phase signal graphs $\theta[n]'$, based on Equation 3 below.

S310 comprises a step S311 that the image analysis processor 70 generates the interpolated white light interference pattern signal I[n] based on the measurement values (A[n], $\theta[n]$) of each of an amplitude signal graph A[n] and a phase signal graph $\theta[n]$, and the interpolation values (A[n+0.5], $\theta[n+0.5]$) of each the interpolated amplitude signal graph A[n]' and the interpolated phase signal graph $\theta[n]'$, based on Equation 3 below.

$$I[n] = A[n] \times \cos(\theta[n])$$

<Equation 3>

In Equation 3, A[n] is the amplitude of the pixel of WLI Fringe, and $\theta[n]$ is the phase on pixel of WLI Fringe.

The terms described in this specification are defined as in Table 1 below.

| Notation | Quantity | Descriptions | Formulation |
|---|---|---|---|
| I[n] | Intensity of Camera | Raw Data of WLI Measurement | $I[n] = A[n]cos(\theta[n]) + I_{DC-offset}$ |
| Amp[n] or A[n] | Amplitude | Amplitude on Pixel of WLI Fringe | $A[n] = (c[n]^2 + s[n]^2)^{1/2}$ |
| Phase[n] or θ[n] | Phase | Phase on Pixel of WLI Fringe | $\theta[n] = Atan(s[n], c[n])$ |
| Cos[n] or c[n] | Cosine | Cosine Component of WLI Fringe | $c[n] = A[n] \times cos(\theta[n])$ |
| Sin[n] or s[n] | Sine | Sine Component of WLI Fringe | $s[n] = A[n] \times sin(\theta[n])$ |
| c'[n] | Normalized Cosine | Normalized Cosine | $c'[n] = cos(\theta[n]) = c[n] / A[n]$ |
| s'[n] | Normalized Sine | Normalized Sine | $s'[n] = sin(\theta[n]) = s[n] / A[n]$ |

<Table 1>

Specifically, I[n] refers to a raw white light interference pattern signal measured by the white light interferometry 100 according to the present invention, and each value (x-axis on the graph) refers to the intensity of the interference pattern, which may be expressed as I[n] = A[n]cos(θ[n]) + IDC-Offset. A[n] refers to the amplitude on pixel of WLI Fringe and may be expressed as $A[n]=(c[n]^2 + s[n]^2)^{1/2}$. θ[n] refers to a phase on pixel of WLI Fringe, and may be expressed as θ[n] = Atan(s[n], c[n]). c[n] is a cosine component of a white light interference fringe signal and may be expressed as c[n] = A[n] × cos(θ[n]). s[n] is a sine component of the white light interference fringe signal and may be expressed as s[n] = A[n] × sin(θ[n]).

In the present specification, the image analysis processor 70 may include processors that execute sequential execution processes stored in the memory. Alternatively, the image analysis processor 70 may operate as software modules driven and controlled by the processor. Furthermore, the image analysis processor 70 may be a hardware device.

For reference, the sinusoidal interpolation of the white light interferometry 100 according to an embodiment of the present invention may be implemented in the form of program instructions that may be performed through various computer means and recorded on a computer-readable medium. The computer-readable medium may include program instructions, data files, data structures, and the like, alone or in combination. The program instructions recorded in the computer-readable medium may be specially designed and configured for the present invention or may be known and available to a skilled person in computer software. Examples of computer-readable media may include magnetic media such as hard disks, floppy disks, and magnetic tapes, optical recording media such as CD-ROMs and DVDs, magneto-optical media such as floptical disks, and hardware devices specifically configured to store and execute program instructions such as ROM, RAM, and flash memory. Examples of program instructions include not only machine code generated by a compiler, but also high-level language code that can be executed by a computer using an interpreter or the like. The hardware device described above may be configured to operate as one or more software modules to perform the operations of the present invention, and vice versa.

The scope of protection of the present invention is not limited to the description and expression of the embodiments explicitly described above. Furthermore, it should be noted that the scope of protection of the present invention may not be limited by obvious modifications or substitutions within the technical field to which the present invention pertains.

**Claims**

1. A white light interferometry using a sinusoidal interpolation comprising;

   a light source providing white light;
   a stage on which a sample is placed;

a stage moving assembly for moving the stage in the direction of the path axis of the white light;

a mirror having a reflective surface;

a beam splitter for dividing a path of the white light provided from the light source into the sample side and the mirror side;

a CCD (Charge Coupled Device) image sensor generating a plurality of interference fringe images by receiving measurement light reflected from the sample and reflected light reflected from the mirror from the beam splitter while the stage is moved in the path axis direction by the stage moving assembly and capturing interference fringes generated by the measurement light and the reflected light; and

an image analysis processor for accumulating the plurality of interference fringe images to generate a white light interference fringe signal (WLI Fringe signal, I[n]),

wherein the image analysis processor generates an interpolated white light interference fringe signal I[n]' by interpolating the generated white light interference fringe signal I[n] through sinusoidal interpolation..

2. The white light interferometry using a sinusoidal interpolation according to claim 1 **characterized in that**,

the image analysis processor, when interpolating the white light interference fringe signal I[n] using a sinusoidal interpolation,

generates an amplitude graph (Envelope, A[n]) and a phase graph (Phase, θ[n]) by dividing the white light interference fringe signal I[n] into components according to amplitude and phase, respectively,

generates an interpolated amplitude graph A[n]' and an interpolated phase graph θ[n]' by interpolating the amplitude graph A[n] and the phase graph θ[n], respectively, through the sinusoidal interpolation, and generates the interpolated white light interference fringe signal I[n]' based on the interpolated amplitude graph A[n]' and the interpolated phase graph θ[n]'.

3. The white light interferometry using a sinusoidal interpolation according to claim 2 **characterized in that**,

the image analysis processor, when generating the amplitude graph and the phase graph by dividing the white light interference fringe signal into components according to amplitude and phase, respectively,

generates the amplitude graph (Envelope) by extracting components A[n] according to amplitude from the white light interference fringe signal I[n], and the phase graph (Phase) by extracting components θ[n] according to phase from the white light interference fringe signal I[n] based on the following Equation 1.

$$A[n] \text{ (Envelope)} = (c[n]^2 + s[n]^2)^{1/2}$$

$$\theta[n](\text{Phase}) = \text{Atan}(s[n], c[n])$$

$$<\text{Equation 1}>$$

(wherein the A[n] is the Amplitude on Pixel of WLI Fringe of the white light interference fringe signal, and the θ[n] is the Phase on Pixel of WLI Fringe of the white light interference fringe signal, and the c[n] is the Cosine Component of WLI Fringe of the white light interference fringe signal calculated by c[n] = A[n] × cos(θ[n]), and the s[n] is the Sine Component of WLI Fringe of the white light interference fringe signal calculated by s[n] = A[n] × sin(θ[n]).

4. The white light interferometry using a sinusoidal interpolation according to claim 3 **characterized in that**,

the image analysis processor, when generating the interpolated amplitude graph A[n]' and the interpolated phase graph θ[n]' by interpolating the amplitude graph A[n] and the phase graph θ[n] respectively through the sinusoidal interpolation,

calculates the interpolation values (A[n+0.5], θ[n+0.5]) between the first measurement values (A[n], θ[n]) and the second measurement values (A[n+1], θ[n+1]) of the amplitude graph A[n] and the phase graph θ[n] respectively, based on the following Equation 2.

$$A[n + 0.5] = 0.5*(A[n] + A[n + 1])$$

$$\theta[n + 0.5] = 0.5*(\theta[n] + \theta[n + 1])$$

<Equation 2>

(wherein the A[n] is the Amplitude on Pixel of WLI Fringe of the white light interference fringe signal, and $\theta[n]$ is the Phase on Pixel of WLI Fringe of a white light interference fringe signal).

5. The white light interferometry using a sinusoidal interpolation according to claim 4 **characterized in that**,

the image analysis processor,
when generating the interpolated white light interference fringe signal I[n]' based on the interpolated amplitude graph A[n]' and the interpolated phase graph $\theta[n]'$, calculates the interpolated white light interference fringe signal I[n]' based on the each measurement values (A[n], $\theta[n]$) of the amplitude graph A[n] and the phase graph $\theta[n]$ and each interpolation values (A[n+0.5], $\theta[n+0.5]$) of the interpolated amplitude graph A[n]' and the interpolated phase graph $\theta[n]'$ based on the following Equation 3.

$$I[n] = A[n] \times \cos(\theta[n])$$

<Equation 3>

(wherein the A[n] is the Amplitude on Pixel of WLI Fringe of a white light interference fringe signal, and the $\theta[n]$ is the Phase on Pixel of WLI Fringe of a white light interference fringe signal).

6. A white light interferometry using a sinusoidal interpolation in which white light is irradiated to a sample and a mirror, respectively, and then obtained a shape of the sample by analyzing interference fringes generated by reflected measurement light and the reflected light, wherein the white light interferometry comprising:

a CCD (Charge Coupled Device) image sensor for generating a plurality of interference fringe images by capturing the interference fringe; and
an image analysis processor for generating a white light interference fringe signal (WLI Fringe signal, I[n]) by accumulating the plurality of interference fringe images,
wherein the image analysis processor generates an interpolated white light interference fringe signal I[n]' by interpolating the generated white light interference fringe signal I[n] through the Sinusoidal Interpolation.

7. The white light interferometry according to claim 6 **characterized in that**,

the image analysis processor, when interpolating the white light interference fringe signal I[n] using a sinusoidal interpolation,
generates an amplitude graph (Envelope, A[n]) and a phase graph (Phase, $\theta[n]$) based on the white light interference fringe signal I[n],
generates an interpolated amplitude graph A[n]' and an interpolated phase graph $\theta[n]'$ by interpolating the amplitude graph A[n] and the phase graph $\theta[n]$ respectively using the sinusoidal interpolation, and
generates the interpolated white light interference fringe I[n]' based on the interpolated amplitude graph A[n]' and the interpolated phase graph I[n]'.

8. The white light interferometry according to claim 7 **characterized in that**,

the image analysis processor, when generating the amplitude graph A[n] and the phase graph $\theta[n]$ based on the white light interference fringe signal I[n],
extracts components of amplitude and phase from the white light interference fringe signal I[n], respectively, to generate an amplitude graph A[n] and a phase graph $\theta[n]$ in linear.

9. The white light interferometry according to claim 8 **characterized in that**, the linear amplitude graph A[n] is an envelope contacting all the peak points of the white light interference fringe signal I[n] among the envelopes of the white light interference fringe signal I[n].

10. The white light interferometry according to claim 8 **characterized in that**,

the image analysis processor, when interpolating the amplitude graph A[n] and the phase graph θ[n] respectively using the sinusoidal interpolation,
calculates interpolation values (A[n+0.5], θ[n+0.5]) between the first measurement values (A[n], θ[n]) and the second measurement values (A[n+1], θ[n+1]) of the amplitude graph A[n] and the phase graph θ[n],
wherein the interpolation values (A[n+0.5], θ[n+0.5]) is average value of the first measurement values (A[n], θ[n]) and the second measurement values (A[n+1], θ[n+1]).

11. The white light interferometry according to claim 10 **characterized in that**,
the image analysis processor, when generating the interpolated white light interference fringe signal I[n]' based on the interpolated amplitude graph A[n]' and the interpolated phase graph θ[n]', generate the interpolated white light interference fringe signal I[n]' based on the measured value (A[n], θ[n]) of each the amplitude graph A[n] and the phase graph θ[n], and the each interpolation values (A[n+0.5], θ[n+0.5]) of the interpolated amplitude graph A[n]' and the interpolated phase graph θ[n]'.

12. The white light interferometry according to claim 11 **characterized in that**, the measured value (A[n], θ[n]) of each the amplitude graph A[n] and the phase graph θ[n], and the measured values (A[n]', θ[n]') of each the interpolated amplitude graph A[n]' and the interpolated phase graph θ[n]' have the same value each other.

13. The white light interferometry according to claim 12 **characterized in that**,

the image analysis processor, when generating the interpolated white light interference fringe signal I[n]' based on the interpolated amplitude graph A[n]' and the interpolated phase graph θ[n]', determine the intensity value of the interpolated white light interference fringe signal I[n]' based on each the measured values (A[n], θ[n]) of interpolated amplitude graph A[n]' and the interpolated phase graph θ[n]' or the interpolation values (A[n+0.5], 0[n+0.5]),
when the measured value A[n] of the interpolated amplitude graph A[n]' is maximum and the phase of the interpolated phase graph θ[n]' is 0°,
if the measured value θ[n] or the interpolation value (θ[n+0.5]) of the interpolated phase graph is greater than -90° to less than 90°, the intensity values of the interpolated white light interference fringe signal I[n]' have a positive (+) value corresponding to the measured value A[n] or the interpolation value (A[n+0.5]) of the interpolated amplitude graph A[n]',
if the measured value θ[n] or the interpolation value (θ[n+0.5]) of the interpolated phase graph is greater than 90° to less than 270°, the intensity values of the interpolated white light interference fringe signal I[n]' have a negative (-) value corresponding to the measured value A[n] or the interpolation value (A[n+0.5]) of the interpolated amplitude graph A[n]', and
if the measured value θ[n] or the interpolation value (θ[n+0.5]) of the interpolated phase graph is at -90°, 90° or 270°, the intensity values of the interpolated white light interference fringe signal I[n]' has a value of 0.

14. A method of sinusoidal interpolation of a white light interferometry in which an image analysis processor interpolates a white light interference fringe signal I[n] through a sinusoidal interpolation to generate an interpolated white light interference fringe signal I[n]', the method of sinusoidal interpolation comprising:

generating an amplitude graph (Envelope, A[n]) and a phase graph (Phase, θ[n]) based on the white light interference fringe signal I[n] by image analysis processor,
generating an interpolated amplitude graph A[n]' and an interpolated phase graph θ[n]' by interpolating the amplitude graph A[n] and the phase graph θ[n] respectively through the sinusoidal interpolation by the image analysis processor, and
generating the interpolated white light interference fringe signal I[n]' based on the interpolated amplitude graph A[n]' and the interpolated phase graph θ[n]' by the image analysis processor.

15. The method of sinusoidal interpolation of a white light interferometry according to claim 14, the generating an amplitude graph (Envelope, A[n]) and a phase graph (Phase, θ[n]) based on the white light interference fringe signal I[n] by the image analysis processor comprising:
generating a linear phase graph θ[n] and the amplitude graph A[n], by extracting a component depending on the Amplitude and Phase of the white light interference fringe signal I[n], respectively, by the image analysis processor generating.

16. The method of sinusoidal interpolation of a white light interferometry according to claim 15, the generating a linear phase graph θ[n] and the amplitude graph A[n], by extracting a component depending on the Amplitude and Phase of the white light interference fringe signal I[n], respectively, by the image analysis processor comprising:
generating the amplitude graph (Envelope) by extracting component A[n] depending on the amplitude of the white light interference fringe signal I[n] and generating phase graph (Phase) by extracting component θ[n] depending on the phase of the white light interference fringe signal I[n] the white light interference fringe signal I[n], based on the Equation 1 below by the image analysis processor.

$$A[n] \text{ (Envelope)} = (c[n]^2 + s[n]^2)^{1/2}$$

$$\theta[n](\text{Phase}) = \text{Atan}(s[n], c[n]).$$

$$<\text{Equation 1}>$$

(wherein A[n] is the Amplitude on Pixel of WLI Fringe, and θ[n] is the Phase on Pixel of WLI Fringe, and c[n] is the Cosine Component of the WLI Fringe calculated by $c[n] = A[n] \times \cos(\theta[n]$, and the s[n] is the Sine Component of WLI Fringe calculated by $s[n] = A[n] \times \sin(\theta[n])$.

17. The method of sinusoidal interpolation of a white light interferometry according to claim 14, the generating an interpolated amplitude graph A[n]' and an interpolated phase graph θ[n]' by interpolating the amplitude graph A[n] and the phase graph θ[n] respectively through the sinusoidal interpolation by the image analysis processor comprising:

calculating interpolation values (A[n+0.5], θ[n+0.5]) between first measured values (A[n], θ[n]) and second measured values (A[n+1], θ[n+1]) of each of the amplitude graph A[n] and the phase graph θ[n] by the image analysis processor,
wherein the interpolation values (A[n+0.5], θ[n+0.5]) are **characterized by** being average values of the first measurement values (A[n], θ[n]) and the second measurement values (A[n+1], θ[n+1]).

18. The method of sinusoidal interpolation of a white light interferometry according to claim 17, the calculating interpolation values (A[n+0.5], θ[n+0.5]) between first measured values (A[n], θ[n]) and second measured values (A[n+1], θ[n]) of each of the amplitude graph A[n] and the phase graph θ[n] by the image analysis processor comprising:
calculating interpolation values (A[n+0.5], θ[n+0.5]) between first measured values (A[n], θ[n]) and second measured values (A[n+1], θ[n+1]) of each of the amplitude graph A[n] and the phase graph θ[n] based in Equation 2 below by the image analysis processor.

$$A[n +0.5] = 0.5*(A[n] +A[n + 1])$$

$$\theta[n+0.5] = 0.5*(\theta[n] + \theta[n+1]).$$

$$<\text{Equation 2}>$$

(wherein A[n] is the Amplitude on Pixel of WLI Fringe, and θ[n] is the Phase on Pixel of WLI Fringe.)

19. The method of sinusoidal interpolation of a white light interferometry according to claim 14, the generating an interpolated white light interference fringe signal I[n]' based on the interpolated amplitude graph A[n]' and the interpolated phase graph θ[n]' by the image analysis processor comprising:
generating the interpolated white light interference fringe signal I[n]' based on the measured values (A[n], θ[n]) of each of the amplitude graph A[n] and the phase graph θ[n], and the interpolation values (A[n+0.5], θ[n+0.5]) of each of the interpolated amplitude graph A[n]' and the interpolated phase graph θ[n]' by the image analysis processor.

20. The method of sinusoidal interpolation of a white light interferometry according to claim 19, the generating the interpolated white light interference fringe signal I[n]' based on the measured values (A[n], θ[n]) of each of the amplitude graph A[n] and the phase graph θ[n], and the interpolation values (A[n+0.5], θ[n+0.5]) of each of the interpolated amplitude graph A[n]' and the interpolated phase graph θ[n]' by the image analysis processor comprising:
generating the interpolated white light interference pattern signal I[n]' based on the measured values (A[n], θ[n]) of each of the amplitude graph A[n] and the phase graph θ[n], and the interpolation values (A[n+0.5], θ[n+0.5]) of each the interpolated amplitude graph A[n]' and the interpolated phase graphs θ[n]' based on Equation 3 below by the image analysis processor.

$$I[n] = A[n] \times \cos(\theta[n])$$

<Equation 3>

(wherein A[n] is the Amplitude on Pixel of WLI Fringe, and θ[n] is the Phase on Pixel of WLI Fringe.)

FIG. 1

FIG. 2

FIG. 3

EP 4 741 758 A1

FIG. 4

FIG. 5

Start

S100 — generating amplitude signal graph (Envelope, A[n]) and phase signal graph (Phase, θ[n]) based on the white light interference fringe signal I[n]

S200 — generating interpolated amplitude signal graph A[n]' and interpolated phase signal graph θ[n]' by interpolating the amplitude signal graph A[n] and the phase signal graph θ[n], respectively, using sinusoidal interpolation

S300 — generating interpolated white light interference fringe signal I[n]' based on the interpolated amplitude signal graph A[n]' and the interpolated phase signal graph θ[n]'

End

# FIG. 6

FIG. 7

FIG. 8

## INTERNATIONAL SEARCH REPORT

| | International application No. |
|---|---|
| | **PCT/KR2024/009502** |

| A. | CLASSIFICATION OF SUBJECT MATTER |
|---|---|

**G01B 9/0209**(2022.01)i; **G01B 9/02001**(2022.01)i; **G01B 11/24**(2006.01)i; **G06F 17/10**(2006.01)i; **G01B 21/08**(2006.01)i

According to International Patent Classification (IPC) or to both national classification and IPC

| B. | FIELDS SEARCHED |
|---|---|

Minimum documentation searched (classification system followed by classification symbols)

G01B 9/0209(2022.01); G01B 11/04(2006.01); G01B 11/06(2006.01); G01B 11/24(2006.01); G01B 9/02(2006.01); G01N 21/45(2006.01); G02B 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 백색광 간섭계(White-light interferometry), 간섭 무늬(interferometer fringe), 스테이지(stage), 빔 스플리터(beam splitter), 진폭 그래프(amplitude graph, envelope graph), 위상 그래프(phase graph), 시누소이드 보간법(sinusoidal interpolation)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2015-078879 A (UNIV OF TSUKUBA) 23 April 2015 (2015-04-23)<br>See paragraphs [0018]-[0058] and figures 1-3. | 1,6 |
| A | | 2-5,7-20 |
| Y | JP 2003-065722 A (SEMICONDUCTOR LEADING EDGE TECHNOLOGIES INC.) 05 March 2003 (2003-03-05)<br>See paragraph [0030] and figure 4. | 1,6 |
| A | KR 10-2011-0130532 A (ICOS VISION SYSTEMS N.V) 05 December 2011 (2011-12-05)<br>See claims 1 and 2 and figure 1. | 1-20 |
| A | KR 10-2005-0119642 A (ZYGO CORPORATION) 21 December 2005 (2005-12-21)<br>See figures 3 and 8. | 1-20 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 October 2024** | **11 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/009502**

| C. | DOCUMENTS CONSIDERED TO BE RELEVANT | |
|---|---|---|
| Category* | Citation of document, with indication, where appropriate, of the relevant passages | Relevant to claim No. |
| A | JP 2009-244081 A (V TECHNOLOGY CO., LTD.) 22 October 2009 (2009-10-22)<br>See claim 1 and figures 1 and 4. | 1-20 |

Form PCT/ISA/210 (second sheet) (July 2022)

**INTERNATIONAL SEARCH REPORT**
Information on patent family members

International application No.

**PCT/KR2024/009502**

| Patent document cited in search report | | | Publication date (day/month/year) | Patent family member(s) | | | Publication date (day/month/year) |
|---|---|---|---|---|---|---|---|
| JP | 2015-078879 | A | 23 April 2015 | CN | 101729594 | A | 09 June 2010 |
| | | | | CN | 101729594 | B | 07 August 2013 |
| | | | | JP | 6257072 | B2 | 10 January 2018 |
| JP | 2003-065722 | A | 05 March 2003 | | None | | |
| KR | 10-2011-0130532 | A | 05 December 2011 | CA | 2559324 | A1 | 22 September 2005 |
| | | | | CN | 100485312 | C | 06 May 2009 |
| | | | | CN | 101076705 | A | 21 November 2007 |
| | | | | EP | 1751492 | A2 | 14 February 2007 |
| | | | | EP | 1751492 | A4 | 20 July 2016 |
| | | | | HK | 1119231 | A1 | 27 February 2009 |
| | | | | JP | 2007-533977 | A | 22 November 2007 |
| | | | | JP | 2011-154042 | A | 11 August 2011 |
| | | | | KR | 10-1159380 | B1 | 27 June 2012 |
| | | | | KR | 10-1159495 | B1 | 22 June 2012 |
| | | | | KR | 10-2007-0047235 | A | 04 May 2007 |
| | | | | US | 2010-0002950 | A1 | 07 January 2010 |
| | | | | US | 8319975 | B2 | 27 November 2012 |
| | | | | WO | 2005-086582 | A2 | 22 September 2005 |
| | | | | WO | 2005-086582 | A3 | 14 June 2007 |
| KR | 10-2005-0119642 | A | 21 December 2005 | CN | 100784587 | A | 07 June 2006 |
| | | | | CN | 100784587 | B | 08 September 2010 |
| | | | | EP | 1604168 | A2 | 14 December 2005 |
| | | | | EP | 1604168 | B1 | 27 July 2011 |
| | | | | JP | 2006-519993 | A | 31 August 2006 |
| | | | | JP | 2011-002467 | A | 06 January 2011 |
| | | | | JP | 5827794 | B2 | 02 December 2015 |
| | | | | KR | 10-1167893 | B1 | 30 July 2012 |
| | | | | WO | 2004-079295 | A2 | 16 September 2004 |
| | | | | WO | 2004-079295 | A3 | 14 April 2005 |
| JP | 2009-244081 | A | 22 October 2009 | JP | 5585804 | B2 | 10 September 2014 |

Form PCT/ISA/210 (patent family annex) (July 2022)